# EUROPÄISCHE PATENTANMELDUNG

(11) **EP 2 532 418 A1**
(43) Veröffentlichungstag der Anmeldung: **12.12.2012**
(21) Anmeldenummer: 11169529.2
(22) Anmeldetag: 10.06.2011
(51) Int. Cl.: B01F 3/04, B01F 15/00, B03D 1/24, B08B 1/00, C02F 1/24

(54) **Begasungssystem und deren Verwendung, sowie Verfahren zur Maximierung einer Begasungsleistung**

(71) Anmelder: Siemens Aktiengesellschaft, 80333 München (DE)
(72) Erfinder: Grossmann, Lilla, Dr., 91058 Erlangen (DE); Krieglstein, Wolfgang, 90491 Nürnberg (DE)

(57) **Zusammenfassung**

Die Erfindung betrifft ein Begasungssystem zur Begasung einer Suspension, umfassend eine Begasungseinrichtung, welche mindestens einen Gasverteiler, der Gasaustrittsöffnungen mit einem maximalen Öffnungsdurchmesser von etwa 15 mm aufweist, umfasst, wobei das Begasungssystem weiterhin mindestens eine Reinigungseinrichtung umfasst, welche eingerichtet ist, die Gasaustrittsöffnungen von Verunreinigungen durch Feststoffpartikel aus der Suspension zu befreien. Die Erfindung betrifft weiterhin ein Verfahren zur Maximierung einer Begasungsleistung einer Begasungseinrichtung zum Begasen einer Suspension, wobei die Begasungseinrichtung mindestens einen Gasverteiler umfasst, der Gasaustrittsöffnungen mit einem maximalen Öffnungsdurchmesser von etwa 15 mm aufweist, und weiterhin mindestens eine Gasversorgungsleitung umfasst, über welche die Begasungseinrichtung mit Gas versorgt wird, das über die Gasaustrittsöffnungen der Suspension zugeführt wird.

## Beschreibung

Die Erfindung betrifft ein Begasungssystem zur Begasung einer Suspension, umfassend eine Begasungseinrichtung, welche mindestens einen Gasverteiler, der Gasaustrittsöffnungen mit einem maximalen Öffnungsdurchmesser von etwa 15 mm aufweist, umfasst. Die Erfindung betrifft weiterhin die Verwendung des Begasungssystems sowie ein Verfahren zur Maximierung einer Begasungsleistung einer Begasungseinrichtung zum Begasen einer Suspension, wobei die Begasungseinrichtung mindestens einen Gasverteiler umfasst, der Gasaustrittsöffnungen mit einem maximalen Öffnungsdurchmesser von 15 mm aufweist, und weiterhin mindestens eine Gasversorgungsleitung umfasst, über welche die Begasungseinrichtung mit Gas versorgt wird, das über die Gasaustrittsöffnungen der Suspension zugeführt wird.

Eine Begasung von Suspensionen wird in diversen Industriezweigen durchgeführt und ist hinreichend bekannt. So werden beispielsweise Suspensionen im Bereich der Abwasseraufbereitung, der Rohstoffaufbereitung, der Nahrungsmittelindustrie usw. mit Gas versetzt. Häufig wird Luft oder Sauerstoff als Gas verwendet, es können aber auch andere Gase zum Einsatz kommen.

Beispielsweise wird zur Aufbereitung von Rohstoffen unter anderem ein sogenanntes Flotationsverfahren eingesetzt. Die Flotation ist ein physikalisches Trennverfahren zur Trennung feinkörniger Feststoffgemenge, wie beispielsweise von Erzen und Gangart, in einer wässrigen Aufschlämmung bzw. Suspension mit Hilfe von Gasbläschen aufgrund einer unterschiedlichen Oberflächenbenetzbarkeit der in der Suspension enthaltenen Partikel. Sie wird zur Aufbereitung von Bodenschätzen und bei der Verarbeitung von vorzugsweise mineralischen Stoffen mit einem niedrigen bis mittleren Gehalt an einer Nutzkomponente bzw. eines Wertstoffs verwendet, beispielsweise in Form von Nichteisenmetallen, Eisen, Metallen der seltenen Erden und/oder Edelmetallen sowie nichtmetallischen Bodenschätzen.

Die WO 2006/069995 A1 beschreibt eine pneumatische Flotationszelle mit einem Gehäuse, das eine Flotationskammer umfasst, mit mindestens einer Düsenanordnung zur Zuführung von Suspension in die Flotationskammer, hier als Ejektoren bezeichnet, weiterhin mit mindestens Begasungseinrichtung zur Zuführung von Gas in die Flotationskammer, bei Verwendung von Luft Belüftungseinrichtungen oder Aeratoren genannt, sowie einem Sammelbehälter für ein bei der Flotation gebildetes Schaumprodukt.

Bei der pneumatischen Flotation wird generell eine mit Reagenzien versetzte Suspension aus Wasser und feinkörnigem Feststoff über mindestens eine Düsenanordnung in eine Flotationskammer eingebracht. Die Reagenzien sollen bewirken, dass insbesondere die wertvollen, bevorzugt abzutrennenden Partikel bzw. Wertstoffpartikel in der Suspension hydrophob ausgebildet werden. Meist werden als Reagentien Xanthate eingesetzt, insbesondere um sulfidische Erzpartikel selektiv zu hydrophobisieren. Gleichzeitig mit der Suspension wird der mindestens einen Düsenanordnung Gas, insbesondere Luft, zugeführt, das mit den hydrophoben Partikeln in der Suspension in Berührung kommt. Zusätzlich wird Gas über die Begasungseinrichtung in einen unteren Teil der Flotationskammer eingebracht. Eine solche Begasungseinrichtung umfasst in der Regel mindestens einen Gasverteiler, der Gasaustrittsöffnungen aufweist. Die hydrophoben Partikel haften an sich bildenden Gasbläschen an, so dass die Gasbläschen-Gebilde, auch Aeroflocken genannt, aufschwimmen und an der Oberfläche der Suspension das Schaumprodukt bilden. Das Schaumprodukt wird in einen Sammelbehälter ausgetragen und üblicherweise noch eingedickt.

Die Qualität des Schaumprodukts bzw. der Trennerfolg des Verfahrens der Flotation ist unter anderem von der Kollisionswahrscheinlichkeit zwischen einem hydrophoben Partikel und einem Gasbläschen abhängig. Je höher die Kollisionswahrscheinlichkeit, desto größer ist die Anzahl an hydrophoben Partikeln, die an einem Gasbläschen anhaften, an die Oberfläche aufsteigen und zusammen mit den Partikeln das Schaumprodukt bilden.

Ein bevorzugter Durchmesser der Gasbläschen ist dabei kleiner als etwa 5 mm. Derart kleine Gasbläschen weisen eine hohe spezifische Oberfläche auf und sind daher in der Lage, deutlich mehr Wertstoffpartikel, insbesondere Erzpartikel, pro eingesetzte Menge an Gas zu binden und mit sich zu nehmen, als es größere Gasblasen in der Lage sind.

Generell steigen Gasbläschen mit größerem Durchmesser schneller auf als Gasbläschen kleineren Durchmessers. Dabei werden die kleineren Gasbläschen von größeren Gasbläschen aufgesammelt und vereinigen sich mit diesen zu noch größeren Gasblasen. Dadurch reduziert sich die zur Verfügung stehende spezifische Oberfläche der Gasbläschen in der Suspension, an der Wertstoffpartikel gebunden werden können.

Bei säulenartig ausgebildeten Flotationszellen, bei welchen ein Durchmesser der Flotationskammer um ein Vielfaches geringer ist als deren Höhe, ist der Weg, welchen ein Gasbläschen in der Suspension bzw. der Flotationskammer zurücklegen muss, um an die Oberfläche der Suspension zu gelangen, besonders groß. Aufgrund des besonders langen Weges entstehen in der Suspension besonders große Gasblasen. Dadurch sinkt der spezifische Austrag an Wertstoffpartikeln aus der Suspension und somit auch der Wirkungsgrad der Flotationszelle. Feinanteile mit Partikeldurchmessern im Bereich von 20 µm und weniger werden besonders gut abgeschieden.

Hybridflotationszellen stellen eine Kombination einer pneumatischen Flotationszelle mit einer säulenartig ausgebildeten Flotationszelle dar.

Um also die Austragsleistung einer Flotationzelle oder Hybridflotationszelle zu maximieren, sollen in der Regel Gasbläschen mit einem möglichst kleinen Durchmesser erzeugt werden. Es wird daher ein Öffnungsdurchmesser der Gasaustrittsöffnungen im Bereich des/der Gasverteiler der Begasungseinrichtung möglichst klein dimensioniert.

Es hat sich allerdings gezeigt, dass die derart klein dimensionierten Gasaustrittsöffnungen, die üblicherweise einen Öffnungsdurchmesser von maximal 15 mm, insbesondere von maximal 5 mm, aufweisen, in der Flotationskammer schnell mit Feststoffpartikeln aus der Suspension verstopfen und der Gasdruck im Gasverteiler stark ansteigt. Die Menge an Gas, die in die Suspension gelangt, sinkt ab und die Austragsleistung der Flotationszelle sinkt. In einem solchen Fall wird die Flotationszelle bisher außer Betrieb genommen und eine manuelle Reinigung des/der Gasverteiler(s) durchgeführt. Dieser Reinigungsvorgang ist zeitaufwendig und mit einer unerwünschten Stillstandszeit und damit einem Produktionsausfall für die betroffene Flotationszelle verbunden.

Es ist daher Aufgabe der Erfindung, ein Begasungssystem zur Begasung einer Suspension bereitzustellen, mit dem eine Verstopfung von Gasaustrittsöffnungen durch Feststoffpartikel der Suspension schneller entfernt werden kann.

Es ist weiterhin Aufgabe der Erfindung, ein Verfahren zur Maximierung einer Begasungsleistung einer Begasungseinrichtung zum Begasen einer Suspension bereitzustellen.

Die Aufgabe wird für das Begasungssystem zur Begasung einer Suspension, umfassend eine Begasungseinrichtung, welche mindestens einen Gasverteiler umfasst, der Gasaustrittsöffnungen mit einem maximalen Öffnungsdurchmesser von etwa 15 mm, insbesondere von etwa 5 mm, aufweist, dadurch gelöst, dass das Begasungssystem weiterhin mindestens eine Reinigungseinrichtung umfasst, welche eingerichtet ist, die Gasaustrittsöffnungen von Verunreinigungen durch Feststoffpartikel aus der Suspension zu befreien.

Eine derartige Reinigungseinrichtung ermöglicht es, die Gasaustrittsöffnungen von Verunreinigungen durch Feststoffpartikel aus der Suspension zu befreien, ohne dazu im Betrieb des Begasungssystems ein Begasungsvorgang der Suspension unterbrochen werden muss. Die Anlage, welche mit dem erfindungsgemäßen Begasungssystem ausgestattet ist, muss demnach bei einer Verstopfung der Gasaustrittsöffnungen nicht mehr außer Betrieb genommen werden. Die Produktionsleistung einer mit dem Begasungssystem ausgestatteten Anlage ist aufgrund geringerer Stillstandszeiten der Anlage deutlich erhöht.

Die Reinigungseinrichtung kann bei Bedarf manuell durch Bedienpersonal aktiviert oder automatisch in Aktion treten. Insgesamt ist der Bedarf an Bedien- oder Wartungspersonal für das Begasungssystem im Vergleich zu einer Bedienung und Wartung herkömmlicher Begasungseinrichtungen deutlich reduziert. Die Aufgabe wird für das Verfahren zur Maximierung einer Begasungsleistung einer Begasungseinrichtung zum Begasen einer Suspension, wobei die Begasungseinrichtung mindestens einen Gasverteiler umfasst, der Gasaustrittsöffnungen mit einem maximalen Öffnungsdurchmesser von etwa 15 mm, insbesondere von etwa 5 mm, aufweist, und weiterhin mindestens eine Gasversorgungsleitung umfasst, über welche die Begasungseinrichtung mit Gas versorgt wird, das über die Gasaustrittsöffnungen der Suspension zugeführt wird, mit folgenden Schritten gelöst: Zuführen von Gas zur Suspension, wobei ein Gasdruck des Gases in der mindestens einen Gasversorgungsleitung überwacht wird, und
Initiieren eines Reinigungsvorgangs, bei dem die Gasaustrittsöffnungen von Verunreinigungen befreit werden, sobald der Gasdruck einen ersten Schwellwert übersteigt.

Ein derartiges Verfahren ermöglicht es, die Gasaustrittsöffnungen von Verunreinigungen durch Feststoffpartikel aus der Suspension zu befreien, ohne dass dazu ein Begasungsvorgang der Suspension unterbrochen werden muss. Die Anlage, welche gemäß dem erfindungsgemäßen Verfahren betrieben wird, muss demnach bei einer Verstopfung der Gasaustrittsöffnungen nicht mehr außer Betrieb genommen werden. Die Produktionsleistung einer solchen Anlage ist aufgrund geringerer Stillstandszeiten der Anlage deutlich erhöht.

Der Reinigungsvorgang kann bei Bedarf manuell durch Bedienpersonal oder auch automatisch gestartet werden. Insgesamt ist der Bedarf an Bedien- oder Wartungspersonal für das erfindungsgemäße Verfahren gering.

Bevorzugt wird das erfindungsgemäße Verfahren mittels eines erfindungsgemäßen Begasungssystems durchgeführt, das eine
Reinigungseinrichtung zur Durchführung des Reinigungsvorgangs umfasst.

Es hat sich bewährt, wenn die mindestens eine Reinigungseinrichtung des Begasungssystems mindestens eine bewegliche mechanische Schabereinrichtung umfasst, die durch die Gasaustrittsöffnungen hindurch bewegbar ausgebildet ist. Eine solche Schabereinrichtung weist beispielsweise an den Öffnungsdurchmesser der Gasaustrittsöffnungen angepasste Stifte, Scheiden oder Borsten auf, die bei einer vermuteten oder detektierten Verstopfung der Gasaustrittsöffnungen in diese eingefahren werden und dabei Feststoffpartikel, die sich im Bereich der Gasaustrittsöffnungen an den Gasverteiler angelagert haben, in die Suspension zurück transportieren. Als Schabereinrichtung werden hier auch eine Kratzer-, Bürsten- oder Schneideinrichtungen bezeichnet, die Feststoffanlagerungen im Bereich der Gasaustrittsöffnungen abtragen. Es handelt sich hierbei somit um eine mechanische Reinigung der Gasaustrittsöffnungen.

Weiterhin hat es sich als vorteilhaft erwiesen, wenn die mindestens eine Reinigungseinrichtung einen Ultraschallgenerator umfasst, welcher eingerichtet ist, zumindest den mindestens einen Gasverteiler in Vibration zu versetzen. Ultraschallgeneratoren sind unkompliziert und kostengünstig einsetzbar, wobei bereits kurze Betriebszeiten eines Ultraschallgenerators im Sekundenbereich ausreichen, eine ausreichende Reinigung der Gasaustrittsöffnungen von Feststoffpartikeln zu erreichen. Eine derartige Ultraschallreinigung kann weiterhin auch die mindestens eine mechanische Schabereinrichtung in Vibration versetzen und die Reinigungswirkung dieser noch verbessern.

Vorzugsweise ist der mindestens eine Gasverteiler zumindest teilweise aus einem elastisch verformbaren Werkstoff gebildet. Dabei umfasst die mindestens eine Reinigungseinrichtung eine Quetscheinrichtung, mittels welcher der elastisch verformbare Werkstoff elastisch verformbar ist. Aufgrund der Verformung werden die Öffnungsquerschnitte der vorhandenen Gasaustrittsöffnungen verformt, wobei Feststoffanlagerungen gelöst und ausgedrückt werden, ähnlich wie bei einem Ausdrücken eines Schwamms. Hierbei ist es besonders bevorzugt, dass der elastisch verformbare Werkstoff aus einem offenporigen Kunststoffschaum, wie beispielsweise einem PU-Schaum, gebildet ist. Der elastisch verformbare Werkstoff kann alternativ auch aus einem Kunststoffschlauch gebildet sein, der insbesondere schlitzförmige Gasaustrittsöffnungen aufweist.

Die Quetscheinrichtung kann dabei beispielsweise durch eine manuell oder mittels eines Antriebsmotors bewegbare Hebelanordnung gebildet sein, die bei Betätigung den elastisch verformbaren Werkstoff zusammendrückt oder -quetscht, dehnt oder in irgendeiner Weise verformt. Alternativ kann die Quetscheinrichtung beispielsweise dadurch ausgebildet sein, dass der Gasverteiler umfassend den elastisch verformbaren Werkstoff manuell oder mittels eines Antriebsmotors gegen eine starre Anordnung bewegt oder gedrückt wird, derart dass eine elastische Verformung des elastisch verformbaren Werkstoffs erfolgt. Somit ist jegliche Einrichtung, die eine gewollte elastische Verformung des elastisch verformbaren Werkstoffs bewirken kann, als eine Quetscheinrichtung im Sinne der vorliegenden Erfindung anzusehen. Bevorzugt wird ein elastisch verformbarer Werkstoff in Form eines Schaumwerkstoffs dabei um mindestens 10 %, insbesondere um mindestens 50 %, seines Volumens von der Quetscheinrichtung komprimiert.

Die Begasungseinrichtung umfasst weiterhin vorzugsweise mindestens eine Gasversorgungsleitung, wobei die mindestens eine Reinigungseinrichtung mindestens einen Gasdrucksensor zur Erfassung eines Gasdrucks in der mindestens einen Gasversorgungsleitung umfasst.

Bei dem erfindungsgemäßen Verfahren erfolgt bevorzugt eine Überwachung des Gasdrucks in der mindestens einen Gasversorgungsleitung mittels mindestens eines Gasdrucksensors.

Mittels eines derartigen Gasdrucksensors ist der zeitliche Verlauf des Gasdrucks im Bereich der Gasversorgungsleitung verfolgbar, der mit zunehmender Verstopfung der Gasaustrittsöffnungen durch Feststoffpartikel ansteigt. Der gemessene Gasdruck erlaubt somit Rückschlüsse auf den Zustand der Gasaustrittsöffnungen hinsichtlich einer Verstopfung. Dabei kann der Gasdruck von Bedienpersonal verfolgt und/oder protokolliert werden oder alternativ automatisch erfasst und/oder der zeitliche Verlauf aufgetragen werden.

In einer weiteren bevorzugten Ausführungsform des Begasungssystems weist die mindestens eine Reinigungseinrichtung weiterhin mindestens ein Gasventil zur Änderung einer Gasdurchflussmenge durch die mindestens eine Gasversorgungsleitung auf. Dadurch lässt sich der Gasdruck in der Gasversorgungsleitung und in Folge an den Gasaustrittsöffnungen gezielt verändern.

Es hat sich bewährt, wenn das Begasungssystem weiterhin mindestens eine Recheneinheit umfasst, welche mit der mindestens einen Reinigungseinrichtung datentechnisch verbunden ist. Dabei ist die mindestens eine Recheneinheit insbesondere mit dem mindestens einen Gasdrucksensor und/oder dem mindestens einen Gasventil und/oder dem mindestens einen Ultraschallgenerator und/oder einem elektrischen Antriebsaggregat für die mindestens eine Schabereinrichtung oder die mindestens eine Quetscheinrichtung datentechnisch verbunden.

Die mindestens eine Recheneinheit ist vorzugsweise dazu eingerichtet, einen Reinigungsvorgang zu initiieren, bei welchem die Gasaustrittsöffnungen von Verunreinigungen durch Feststoffpartikel aus der Suspension befreit werden. Ein Reinigungsvorgang wird initiiert, wenn in irgendeiner Form erkennbar wird, dass eine Reinigung erforderlich ist oder wenn die Reinigung von der Recheneinheit automatisch gestartet wird. Die Reinigungseinrichtung kann dazu aber auch lediglich ein Warnsignal ausgeben, das dem Bedienpersonal anzeigt, dass ein Reinigungsvorgang gestartet werden muss, der dann insbesondere automatisch durchgeführt wird.

Für das erfindungsgemäße Verfahren ist es von Vorteil, wenn die von dem mindestens einen Gasdrucksensor erfassten Gasdruckwerte an mindestens eine Recheneinheit übermittelt werden, auf welcher der erste Schwellwert hinterlegt wird, welche die erfassten Gasdruckwerte mit dem ersten Schwellwert vergleicht und bei einer Überschreitung des ersten Schwellwert den Reinigungsvorgang initiiert. Diese Vorgehensweise stellt eine Möglichkeit bereit, die Notwendigkeit für einen Reinigungsvorgang automatisch festzustellen und zu melden, ohne dass dazu Bedienpersonal bereits benötigt wird. Der Start des Reinigungsvorgangs kann dann manuell oder automatisch erfolgen, ohne dass der Begasungsvorgang unterbrochen werden muss.

Insbesondere wird bei dem erfindungsgemäßen Verfahren der Reinigungsvorgang automatisch durch die mindestens eine Recheneinheit gestartet. Dies gewährleistet, dass der Reinigungsvorgang so rechtzeitig erfolgt, dass ein signifikanter Abfall der Begasungsleistung der Suspension vermieden wird.

Es hat sich bei dem erfindungsgemäßen Verfahren bewährt, wenn bei dem Reinigungsvorgang die Gasaustrittsöffnungen mechanisch von Verunreinigungen befreit werden. Dazu werden beispielsweise die bereits oben erwähnten Schaber- Kratzer-, Bürsten- oder Schneideinrichtungen eingesetzt, die Feststoffanlagerungen im Bereich der Gasaustrittsöffnungen abzutragen in der Lage sind, ohne dass ein Begasungsvorgang der Suspension gestoppt werden muss.

Alternativ oder in Kombination zu einer mechanischen Reinigung der Gasaustrittsöffnungen wird bevorzugt eine temporäre weitere Erhöhung des Gasdrucks bis zu einem zweiten Schwellwert durchgeführt, um die Gasaustrittsöffnungen von Verunreinigungen zu befreien. Der zweite Schwellwert liegt dabei oberhalb, insbesondere 50 % oberhalb, des ersten Schwellwerts. Eine Erhöhung des Gasdrucks führt zu einem beschleunigten Austreten des Gases über die Gasaustrittsöffnungen in die Suspension, wobei das Gas angelagerte Feststoffpartikel mit sich reißt und die Gasaustrittsöffnungen reinigt.

Dabei ist es besonders bevorzugt, bei dem Reinigungsvorgang die Gasaustrittsöffnungen von Verunreinigungen befreit werden, indem ein Pulsieren des Gasdrucks erzeugt wird. Dabei wird der Gasdruck gezielt mehrmals erhöht und wieder abgesenkt, wobei im Bereich der Gasaustrittsöffnungen angelagerte Feststoffpartikel abgelöst und in die Suspension zurück befördert werden. Das Pulsieren des Gasdrucks kann weiterhin dazu eingesetzt werden, den Gasverteiler in Vibration zu versetzen, um eine Reinigung der Gasaustrittsöffnungen zu erzielen.

Optional kann auch ein kurzzeitiges Einleiten einer Reinigungsflüssigkeit, je nach Suspension beispielsweise in Form einer in der Suspension ohnehin enthaltenen Flüssigkeit, über die mindestens eine Gasversorgungsleitung zum Gasverteiler und den Gasaustrittsöffnungen erfolgen. Dabei werden im Bereich der Gasaustrittsöffnungen aufgetretene Feststoffablagerungen aufgelöst und weggespült. Allerdings muss hierbei der Begasungsvorgang der Suspension, wenn auch nur kurzzeitig, unterbrochen werden und es erfolgt ein Einbringen der Reinigungsflüssigkeit in die Suspension und damit eine lokale Verdünnung der Suspension.

Alternativ oder in Kombination zu einer mechanischen Reinigung und/oder einer gezielten Änderung des Gasdrucks in einer Gasversorgungsleitung werden die Gasaustrittsöffnungen bei dem erfindungsgemäßen Verfahren bevorzugt mittels Ultraschalls von Verunreinigungen befreit.

Eine Verwendung eines erfindungsgemäßen Begasungssystems für eine Flotationszelle, insbesondere Hybridflotationszelle, bei der die Gasaustrittsöffnungen in Kontakt zu einer Suspension stehen, die einem Feststoffgehalt im Bereich von 10 bis 60 Gew.-% aufweist, hat sich bewährt.

Auch das erfindungsgemäße Verfahren wird bevorzugt im Bereich von Flotationszellen, insbesondere Hybridflotationszellen, eingesetzt.

Dabei befindet sich der mindestens eine Gasverteiler einer Begasungseinrichtung in einer Suspension umfassend beispielsweise Wasser und Erzmineralpartikeln.

Die Figuren 1 bis 7 sollen erfindungsgemäße Begasungssysteme und Verfahren beispielhaft erläutern, wobei ein Einsatz der

Begasungssysteme hier im Bereich einer schematisch dargestellten Flotationszelle erfolgt. So zeigt
- FIG 1: ein erstes Begasungssystem;
- FIG 2: ein zweites Begasungssystem;
- FIG 3: ein drittes Begasungssystem;
- FIG 4: das dritte Begasungssystem gemäß FIG 3 in der Draufsicht;
- FIG 5: ein viertes Begasungssystem;
- FIG 6: das vierte Begasungssystem gemäß FIG 5 in der Draufsicht; und
- FIG 7: ein Diagramm, welches einen pulsierenden Gasdruck zur Reinigung von Gasaustrittsöffnungen zeigt.

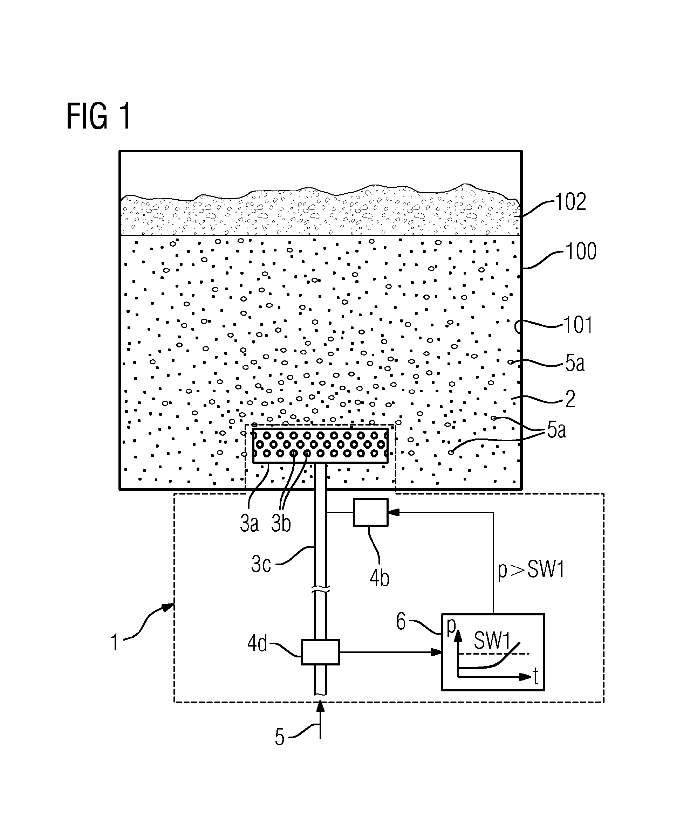

FIG 1 zeigt ein erstes Begasungssystem 1 zur Begasung einer Suspension 2, welche sich in der Flotationskammer 101 einer Flotationszelle 100 befindet. Auf der Oberfläche der Suspension 2 befindet sich das Schaumprodukt 102 umfassend Gasbläschen mit daran anhaftenden hydrophoben Feststoffpartikeln aus der Suspension 2. Das erste Begasungssystem 1 umfasst eine Begasungseinrichtung, die einen Gasverteiler 3a mit Gasaustrittsöffnungen 3b umfasst, wobei die Gasaustrittsöffnungen 3b hier einem maximalen Öffnungsdurchmesser von 5 mm aufweisen. Der Gasverteiler 3a wird über eine Gasversorgungsleitung 3c mit Gas 5, hier in Form von Luft, versorgt. Das Gas 5 wird über die Gasaustrittsöffnungen 3b fein verteilt als Gasbläschen 5a in die Suspension 2 abgegeben. Das erste Begasungssystem 1 umfasst weiterhin eine Reinigungseinrichtung umfassend einen mit der Gasversorgungsleitung 3c verbundenen Ultraschallgenerator 4b und einen den Gasdruck p des Gases 5 in der Gasversorgungsleitung 3c erfassenden Gasdrucksensor 4d. Das erste Begasungssystem 1 umfasst zudem eine Recheneinheit 6, welche mit dem Ultraschallgenerator 4b und dem Gasdrucksensor 4d verbunden ist. Auf der Recheneinheit 6 ist ein erster Schwellwert SW1 für den Gasdruck p hinterlegt. Die von dem Gasdrucksensor 4d an die Recheneinheit 6 übermittelten Werte für den Gasdruck p in der Gasversorgungsleitung 3c werden von der Recheneinheit 6 mit dem ersten Schwellwert SW1 verglichen. Überschreitet der erfasste Gasdruck p in der Gasversorgungsleitung 3c den ersten Schwellwert SW1, ist von einer die Ausbringleistung der Flotationszelle 100 an Schaumprodukt 102 mindernder Verstopfung der Gasaustrittsöffnungen 3b auszugehen. Die Recheneinheit 6 startet hier automatisch einen Reinigungsvorgang, indem sie den Ultraschallgenerator 4b veranlasst, Ultraschall zu erzeugen. Die Gasversorgungsleitung 3c und der daran angeordnete Gasverteiler 3a sind derart mit der Flotationskammer 101 verbunden, dass der Ultraschallgenerator 4b die Gasversorgungsleitung 3c und den Gasverteiler 3b in Vibration versetzt. Dabei lösen sich Feststoffpartikel, welche sich im Bereich der Gasaustrittsöffnungen 3b angelagert haben und die den Öffnungsdurchmesser der Gasaustrittsöffnungen 3b verringern. Sobald die Verunreinigungen aufgelöst oder zumindest soweit verringert wurden, dass der Gasdrucksensor 4d wieder einen Gasdruck p erfasst, der unterhalb des ersten Schwellwerts SW1 liegt, wird der Ultraschallgenerator 4b von der Recheneinheit 6 abgeschaltet. Dabei erfolgt üblicherweise eine zeitgesteuerte Sicherheitsabschaltung des Ultraschallgenerators 4b, sofern sich der Gasdruck p nicht nach einer bestimmten Betriebsdauer des Ultraschallgenerators 4b auf einen Wert unterhalb des ersten Schwellwerts SW1 verringert hat. So können Fehlfunktionen des Begasungssystems oder sonstige Betriebsstörungen, die zu einer Erhöhung des Gasdrucks p in der Gasversorgungsleitung 3c führen, jedoch in keinerlei Zusammenhang mit einer Verstopfung von Gasaustrittsöffnungen 3b stehen, identifiziert und mittels der Recheneinheit 6 an das Bedienpersonal gemeldet werden.

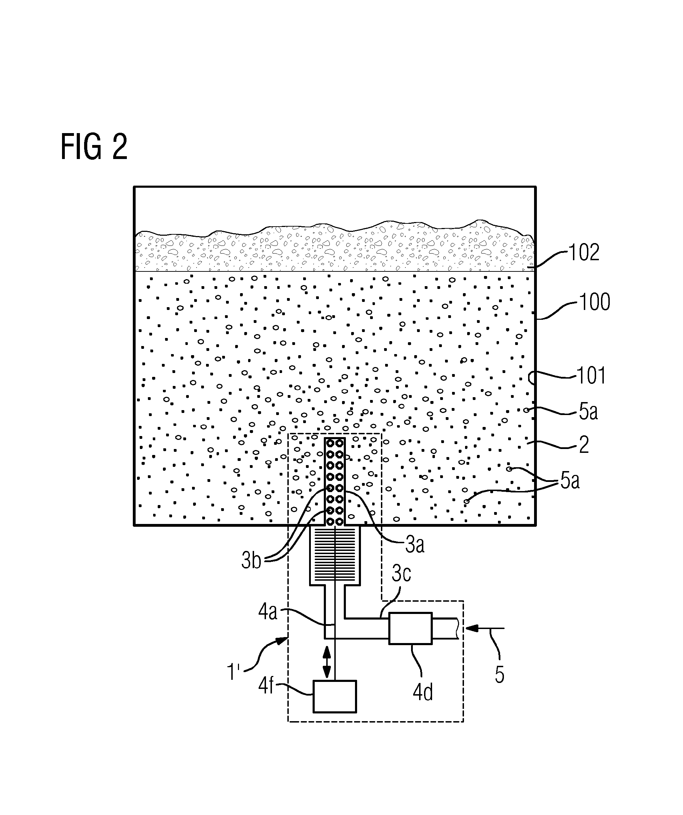

FIG 2 zeigt ein zweites Begasungssystem 1*'* zur Begasung einer Suspension 2, welche sich in der Flotationskammer 101 einer Flotationszelle 100 befindet. Gleiche Bezugszeichen wie in FIG 1 kennzeichnen gleiche Elemente. Das zweite Begasungssystem 1' umfasst eine Begasungseinrichtung, die einen Gasverteiler 3a mit Gasaustrittsöffnungen 3b umfasst, wobei die Gasaustrittsöffnungen 3b hier ebenfalls einem maximalen Öffnungsdurchmesser von 5 mm aufweisen. Der Gasverteiler 3a wird über eine Gasversorgungsleitung 3c mit Gas 5, hier in Form von Luft, versorgt. Das Gas 5 wird über die Gasaustrittsöffnungen 3b fein verteilt als Gasbläschen 5a in die Suspension 2 abgegeben. Das zweite Begasungssystem 1 ' umfasst weiterhin eine Reinigungseinrichtung in Form einer mechanischen Schabereinrichtung 4a, welche hier durch eine Bürste ausgebildet ist, deren Borsten-Durchmesser größer dimensioniert ist als der Innendurchmesser des Gasverteilers 3a. Die Bürste wird mittels eines Antriebsmotors 4f in den Gasverteiler 3a eingeschoben, wobei die Borstenenden überwiegend durch die Gasaustrittsöffnungen 3b hindurch treten und die Gasaustrittsöffnungen 3b von Verunreinigungen befreien. Der Gasdruck p des Gases 5 in der Gasversorgungsleitung 3c wird mittels eines Gasdrucksensors 4d erfasst und wird von Bedienpersonal der Flotationszelle 100 überwacht. Sobald von dem Bedienpersonal festgestellt wird, dass der Gasdruck p einen ersten Schwellwerts SW1 überschritten hat, wird der Reinigungsvorgang der Gasaustrittsöffnungen 3b manuell gestartet. Dabei erfolgt eine manuelle oder vorzugsweise eine zeitgesteuerte Abschaltung des Antriebsmotors 4f.

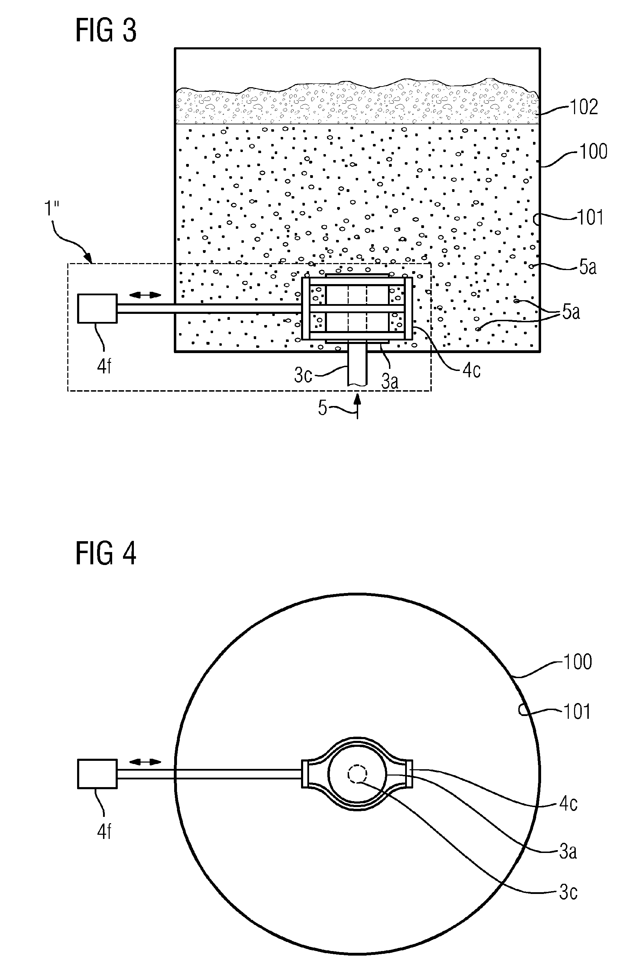

FIG 3 zeigt ein drittes Begasungssystem 1 '' zur Begasung einer Suspension 2, welche sich in der Flotationskammer 101 einer Flotationszelle 100 befindet. Gleiche Bezugszeichen wie in FIG 1 oder FIG 2 kennzeichnen gleiche Elemente. Das dritte Begasungssystem 1*''* umfasst eine Begasungseinrichtung, die einen Gasverteiler 3a aus elastisch verformbarem Schaumstoff, insbesondere aus Polyurethan, mit einer offenen Porosität umfasst. Die an die Oberfläche des Gasverteilers angrenzenden Poren bilden hier die Gasaustrittsöffnungen 3b aus. Der Gasverteiler 3a wird über eine Gasversorgungsleitung 3c mit Gas 5, hier in Form von Sauerstoff, versorgt. Das Gas 5 wird über die Gasaustrittsöffnungen 3b fein verteilt als Gasbläschen 5a in die Suspension 2 abgegeben. Das dritte Begasungssystem 1 *''* umfasst weiterhin eine Reinigungseinrichtung in Form einer Quetscheinrichtung 4c. Bei der Quetscheinrichtung 4c handelt es sich hier um einen mittels eines Antriebsmotors 4f horizontal bewegbaren Metallkäfig. Eine Draufsicht auf den Metallkäfig, der von oben gesehen eine zitronenähnliche Form aufweist, ist in FIG 4 dargestellt. Wird der Metallkäfig von Antriebsmotor 4f wegbewegt, so drückt der Metallkäfig gegen die Seite des Gasverteilers 3a, die in Richtung des Antriebsmotors 4f zeigt und verformt den Schaumstoff elastisch. Wird der Metallkäfig zum Antriebsmotor 4f hin bewegt, so drückt der Metallkäfig auf der anderen Seite gegen den Gasverteiler 3a und verformt den Schaumstoff elastisch. Anstelle des Metallkäfigs kann hier auch ein Greifer eingesetzt werden, der den Schaumstoff verformt. Auch können als Quetschvorrichtungen 4c alternativ allseitig an der Flotationskammer 101 angeordnete Stempel vorgesehen sein, die in Richtung des Gasverteilers 3a bewegt werden und schließlich den Schaumstoff verformen. Die elastische Verformung des Schaumstoffs bewirkt eine Reinigung der Gasaustrittsöffnungen 3b des Schaumstoffs, ähnlich dem Ausdrücken eines Schwamms. Wenn mittels der Quetscheinrichtung 4c keine Kraft mehr auf den Schaumstoff ausgeübt wird, kehrt dieser in seine Ursprungsform zurück.

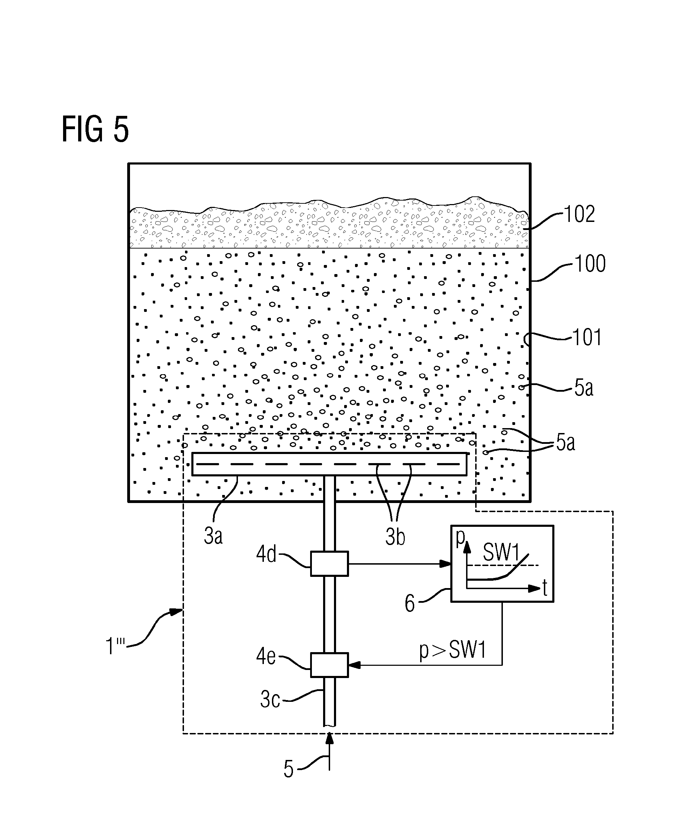

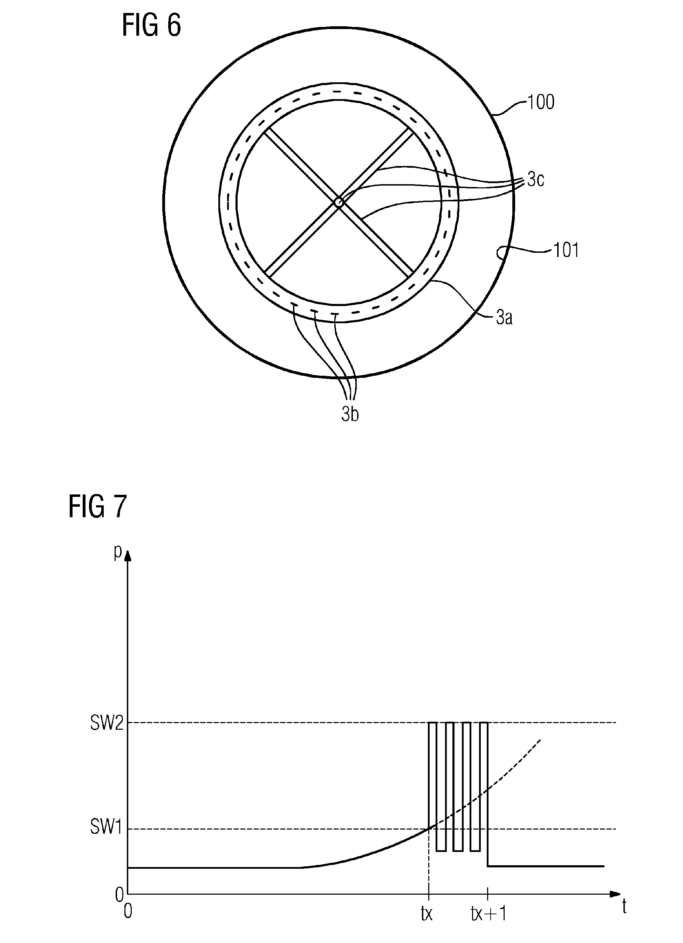

FIG 5 zeigt ein viertes Begasungssystem 1''' zur Begasung einer Suspension 2, welche sich in der Flotationskammer 101 einer Flotationszelle 100 befindet. Gleiche Bezugszeichen wie in FIG 1 kennzeichnen gleiche Elemente. Das vierte Begasungssystem 1 ''' umfasst eine Begasungseinrichtung, die einen Gasverteiler 3a aus einem elastisch verformbaren Kunststoffschlauch aufweist. Die Gasaustrittsöffnungen 3b sind hier durch Schlitze im Kunststoffschlauch von etwa 15 mm Länge ausgebildet. Siehe hierzu auch FIG 6, wo eine Draufsicht auf den Gasverteiler 3a dargestellt ist. Der Gasverteiler 3a wird über eine Gasversorgungsleitung 3c mit Gas 5, hier in Form von Luft, versorgt. Das Gas 5 wird über die Gasaustrittsöffnungen 3b fein verteilt als Gasbläschen 5a in die Suspension 2 abgegeben. Das vierte Begasungssystem 1 ''' umfasst weiterhin eine Reinigungseinrichtung in Form eines Gasventils 4e, das eingerichtet ist, einen Gasdruck p des Gases 5 in der Gasversorgungsleitung 3c zu verändern, sowie eine Gasdrucksensor 4d zur Erfassung des Gasdrucks p. Weiterhin ist eine Recheneinheit 6 vorhanden, die mit dem Gasventil 4e und dem Gasdrucksensor 4d verbunden ist. Die von dem Gasdrucksensor 4d erfassten Werte für den Gasdruck p werden an die Recheneinheit 6 übermittelt, auf welcher ein erster Schwellwert SW1 hinterlegt ist. Damit werden die erfassten Werte für den Gasdruck p verglichen und bei einer Überschreitung des ersten Schwellwerts SW1 ein Reinigungsvorgang der Gasaustrittsöffnungen 3b gestartet. Bei dem Reinigungsvorgang werden nun die Gasaustrittsöffnungen 3b durch eine temporäre weitere Erhöhung des Gasdrucks p mittels des Gasventils 4e bis zu einem zweiten Schwellwert SW2 von Verunreinigungen befreit. Insbesondere werden bei dem Reinigungsvorgang die Gasaustrittsöffnungen 3b von Verunreinigungen befreit, indem ein Pulsieren des Gasdrucks p erzeugt wird.

FIG 7 zeigt ein Diagramm, welches die Nutzung eines pulsierenden Gasdrucks p zur Reinigung der Gasaustrittsöffnungen 3b zeigt. Über der Betriebsdauer t der Begasungseinrichtung ist der Gasdruck p in der Gasversorgungsleitung aufgetragen. Während zu Beginn des Betriebs der Gasdruck p relativ konstant bleibt, steigt der Gasdruck p bei längerer Betriebsdauer langsam an. Überschreitet der Gasdruck p einen ersten Schwellwert SW1, der erfahrungsgemäß einem Absinken der Austragsleistung der Flotationszelle unmittelbar vorausgeht, wird dies als Auslöser für einen Reinigungsvorgang zum Zeitpunkt tx verwendet, bei dem die Gasaustrittsöffnungen 3b von Verunreinigungen befreit werden. Hier wird der Gasdruck p mittels des Gasventils 4e mehrmals bis zu einem zweiten Schwellwert SW2 erhöht und wieder abgesenkt. Der zweite Schwellwert SW2 liegt dabei oberhalb, insbesondere um etwa 50 % oberhalb, des ersten Schwellwerts SW1. Ein schnell aufeinander folgendes Anheben und Absenken des Gasdrucks p bewirkt ein Pulsieren des Gasdrucks p, was in Folge gegebenenfalls auch eine Vibration des Gasverteilers 3a auslösen kann. Zum Zeitpunkt tx+1 wird die ursprüngliche Gaszufuhrmenge zum Gasverteiler 3a mittels des Gasventils 4e wieder eingestellt. War der Reinigungsvorgang erfolgreich, so ist mittels des Gasdrucksensors 4d der in etwa gleiche Gasdruck p erfassbar, wie er bei einem nur kurz betriebenen Gasverteiler 3a erfassbar ist. Alternativ zu einem pulsierenden Gasdruck p kann auch eine einfache Erhöhung des Gasdrucks p auf den Wert des Schwellwerts SW2 über einen bestimmten Zeitraum hinweg erfolgen

Die oben dargestellten Begasungssysteme und Verfahren stellen lediglich Beispiele dar. Ein Fachmann ist in Kenntnis der Erfindung ohne weiteres in der Lage, weitere Begasungssysteme und Verfahren bereitzustellen, ohne dabei erfinderisch tätig werden zu müssen. So können die unterschiedlichen Möglichkeiten, die Gasaustrittsöffnungen zu reinigen, beliebig miteinander kombiniert werden. Auch kann die Ausgestaltung des Gasverteilers, die Anordnung und Form der Gasaustrittsöffnungen am Gasverteiler, die Ausgestaltung der Reinigungseinrichtung und der Einsatzort des Begasungssystems in weiten Grenzen verändert werden.

## Patentansprüche

1. Begasungssystem (1,1',1'',1''') zur Begasung einer Suspension (2), umfassend eine Begasungseinrichtung, welche mindestens einen Gasverteiler (3a), der Gasaustrittsöffnungen (3b) mit einem maximalen Öffnungsdurchmesser von 15 mm aufweist, umfasst,
**dadurch gekennzeichnet, dass** das Begasungssystem (1,1',1'',1 ''') weiterhin mindestens eine Reinigungseinrichtung umfasst, welche eingerichtet ist, die Gasaustrittsöffnungen (3b) von Verunreinigungen durch Feststoffpartikel aus der Suspension (2) zu befreien.

2. Begasungssystem nach Anspruch 1,
**dadurch gekennzeichnet, dass** die mindestens eine Reinigungseinrichtung mindestens eine bewegliche mechanische Schabereinrichtung (4a) umfasst, die durch die Gasaustrittsöffnungen (3b) hindurch bewegbar ausgebildet ist.

3. Begasungssystem nach Anspruch 1 oder Anspruch 2,
**dadurch gekennzeichnet, dass** die mindestens eine Reinigungseinrichtung einen Ultraschallgenerator (4b) umfasst, welcher eingerichtet ist, zumindest den mindestens einen Gasverteiler (3a) in Vibration zu versetzen.

4. Begasungssystem nach Anspruch 1,
**dadurch gekennzeichnet, dass** der mindestens eine Gasverteiler (3a) zumindest teilweise aus einem elastisch verformbaren Werkstoff gebildet ist und dass die mindestens eine Reinigungseinrichtung eine Quetscheinrichtung (4c) umfasst, mittels welcher der elastisch verformbare Werkstoff elastisch verformbar ist.

5. Begasungssystem nach Anspruch 4,
**dadurch gekennzeichnet, dass** der elastisch verformbare Werkstoff aus einem offenporigen Schaumwerkstoff gebildet ist.

6. Begasungssystem nach einem der Ansprüche 1 bis 5,
**dadurch gekennzeichnet, dass** die Begasungseinrichtung weiterhin mindestens eine Gasversorgungsleitung (3c) umfasst und dass die mindestens eine Reinigungseinrichtung mindestens einen Gasdrucksensor (4d) zur Erfassung eines Gasdrucks (p) in der mindestens einen Gasversorgungsleitung (3c) umfasst.

7. Begasungssystem nach Anspruch 6,
**dadurch gekennzeichnet, dass** die mindestens eine Reinigungseinrichtung weiterhin mindestens ein Gasventil (4e) zur Änderung einer Gasdurchflussmenge durch die mindestens eine Gasversorgungsleitung (3c) aufweist.

8. Begasungssystem nach einem der Ansprüche 1 bis 7,
**dadurch gekennzeichnet, dass** weiterhin mindestens eine Recheneinheit (6) vorhanden ist, welche mit der mindestens einen Reinigungseinrichtung datentechnisch verbunden ist.

9. Begasungssystem nach Anspruch 8,
**dadurch gekennzeichnet, dass** die mindestens eine Recheneinheit (6) mit dem mindestens einen Gasdrucksensor (4d) und/oder dem mindestens einen Gasventil (4e) und/oder dem mindestens einen Ultraschallgenerator (4b) und/oder einem elektrischen Antriebsaggregat für die mindestens eine Schabereinrichtung (4a) oder die mindestens eine Quetscheinrichtung (4c) datentechnisch verbunden ist.

10. Begasungssystem nach Anspruch 8 oder Anspruch 9,
**dadurch gekennzeichnet, dass** die mindestens eine Recheneinheit (6) eingerichtet ist, einen Reinigungsvorgang zu initiieren, bei welchem die Gasaustrittsöffnungen (3b) von Verunreinigungen durch Feststoffpartikel aus der Suspension (2) befreit werden.

11. Verfahren zur Maximierung einer Begasungsleistung einer Begasungseinrichtung zum Begasen einer Suspension (2), wobei die Begasungseinrichtung mindestens einen Gasverteiler (3a) umfasst, der Gasaustrittsöffnungen (3b) mit einem maximalen Öffnungsdurchmesser von 15 mm aufweist, und weiterhin mindestens eine Gasversorgungsleitung (3c) umfasst, über welche die Begasungseinrichtung mit Gas (5) versorgt wird, das über die Gasaustrittsöffnungen (3b) der Suspension (2) zugeführt wird, mit folgenden Schritten:
Zuführen von Gas (5) zur Suspension (2), wobei ein Gasdruck (p) des Gases (5) in der mindestens einen Gasversorgungsleitung (3c) überwacht wird, und Initiieren eines Reinigungsvorgangs, bei dem die Gasaustrittsöffnungen (3b) von Verunreinigungen befreit werden, sobald der Gasdruck (p) einen ersten Schwellwert (SW1) übersteigt.

12. Verfahren nach Anspruch 11,
**dadurch gekennzeichnet, dass** der Gasdruck (p) in der mindestens einen Gasversorgungsleitung (3c) mittels mindestens eines Gasdrucksensors (4d) überwacht wird.

13. Verfahren nach Anspruch 12,
**dadurch gekennzeichnet, dass** die von dem mindestens einen Gasdrucksensor (4d) erfassten Gasdruckwerte an mindestens eine Recheneinheit (6) übermittelt werden, auf welcher der erste Schwellwert (SW1) hinterlegt wird, welche die erfassten Gasdruckwerte mit dem ersten Schwellwert (SW1) vergleicht und bei einer Überschreitung des ersten Schwellwert (SW1) den Reinigungsvorgang initiiert.

14. Verfahren nach Anspruch 13,
**dadurch gekennzeichnet, dass** die mindestens eine Recheneinheit (6) automatisch den Reinigungsvorgang startet.

15. Verfahren nach einem der Ansprüche 11 bis 14,
**dadurch gekennzeichnet, dass** bei dem Reinigungsvorgang die Gasaustrittsöffnungen(3b) mechanisch von Verunreinigungen befreit werden.

16. Verfahren nach einem der Ansprüche 11 bis 15,
**dadurch gekennzeichnet, dass** bei dem Reinigungsvorgang die Gasaustrittsöffnungen (3b) durch eine temporäre weitere Erhöhung des Gasdrucks (p) bis zu einem zweiten Schwellwert (SW2) von Verunreinigungen befreit werden.

17. Verfahren nach einem der Ansprüche 11 bis 16,
**dadurch gekennzeichnet, dass** bei dem Reinigungsvorgang die Gasaustrittsöffnungen (3b) von Verunreinigungen befreit werden, indem ein Pulsieren des Gasdrucks (p) erzeugt wird.

18. Verfahren nach einem der Ansprüche 11 bis 17,
**dadurch gekennzeichnet, dass** bei dem Reinigungsvorgang die Gasaustrittsöffnungen (3b) mittels Ultraschalls von Verunreinigungen befreit werden.

19. Verwendung eines Begasungssystems (1,1',1'',1''') nach einem der Ansprüche 1 bis 10 für eine Flotationszelle (100), insbesondere Hybridflotationszelle, bei der die Gasaustrittsöffnungen (3b) in Kontakt zu einer Suspension (2) stehen, die einem Feststoffgehalt im Bereich von 10 bis 60 Gew.-% aufweist.
